# EUROPÄISCHE PATENTSCHRIFT

(11) **EP 1 174 820 B1**
(45) Veröffentlichungstag und Bekanntmachung des Hinweises auf die Patenterteilung: **13.02.2008**
(21) Anmeldenummer: 00115669.4
(22) Anmeldetag: 20.07.2000
(51) Int. Cl.: G06K 19/07

(54) **Chipkarte mit einer Kontaktschnittstelle und einer kontaktlosen Schnittstelle**
Chip card with a contact interface and a non-contact interface
Carte à puce avec une interface de contact et une interface sans contact

(43) Veröffentlichungstag der Anmeldung: 23.01.2002
(73) Patentinhaber: Infineon Technologies AG, 81669 München (DE)
(72) Erfinder: Bader, Martin, 81667 München (DE); Bruecklmayr, Franz-Josef, 86916 Kaufering (DE); Reiner, Robert, 85579 Neubiberg (DE); Schraud, Gerhard, Dr., 86415 Mering (DE); Sedlak, Holger, 85658 Egmating (DE)
(74) Vertreter: Epping - Hermann - Fischer

(56) Entgegenhaltungen:
- WO-A-99/42952
- US-A- 6 003 777

## Beschreibung

Die Erfindung betrifft eine Chipkarte mit einer Kontaktschnittstelle und einer kontaktlosen Schnittstelle sowie mit einer integrierten logischen Schaltung gemäß den Merkmalen des Oberbegriffs des Anspruchs 1.

Bei solchen Chipkarten, die als Combi- oder auch Dual-Interface-Karten bezeichnet werden, ist bisher eine Vorrichtung zur Umschaltung zwischen den beiden Schnittstellen erforderlich.

So beschreibt z.B. die DE 3 935 364 C1 eine Chipkarte mit einer Kontaktschnittstelle, einer kontaktlosen Schnittstelle und mit einer zusätzlichen Detektierschaltung, durch welche festgestellt wird, ob von den Kontakten der Kontaktschnittstelle oder von der Antennenspule der kontaktlosen Schnittstelle eine Versorgungsspannung geliefert wird. Wird von den Kontakten der Kontaktschnittstelle die Versorgungsspannung geliefert, so erzeugt die Schaltungsanordnung ein Steuersignal, welches die Kontaktschnittstelle aktiviert, während im Fall, dass die Antennenspule der kontaktlosen Schnittstelle die Versorgungsspannung liefert, vom Steuersignal dieser Schaltungsanordnung die kontaktlose Schnittstelle eingeschaltet wird.

In WO 96/38814 ist ebenfalls eine Chipkarte mit einer Kontaktschnittstelle und einer kontaktlosen Schnittstelle beschrieben. Eine in die Chipkarte integrierte Wechselspannungserkennungsschaltung prüft, ob die Antennenspule der kontaktlosen Schnittstelle eine Wechselspannung liefert. Wenn dies der Fall ist, wird die kontaktlose Schnittstelle von der Wechselspannungserkennungsschaltung aktiviert. Wenn im anderen Fall die Wechselspannungserkennungsschaltung keine Wechselspannung an der Antennenspule der kontaktlosen Schnittstelle detektiert, schaltet sie die Kontaktschnittstelle der Chipkarte ein.

Eine ähnliche Chipkarte ist aus der US 6,003,777 bekannt. Die Spannung der Kontaktschnittstelle wird über einen Schalter an den Chip geleitet, wobei die Schalterstellung abhängig von der in der kontaktlosen Schnittstelle induzierten Wechselspannung ist. Wird eine Spannung induziert, so öffnet sich der Schalter. Liegt dagegen eine Spannung an der Kontaktschnittstelle an, so schließt sich der Schalter. In Gegensatz zur Kontaktschnittstelle ist die kontaktlose Schnittstelle nicht über einen Schalter, sondern direkt mit dem Chip verbunden.

Ziel der vorliegenden Erfindung ist es, eine Chipkarte mit einer Kontaktschnittstelle und einer kontaktlosen Schnittstelle so zu gestalten, dass keine Schaltungsanordnung zur Umschaltung zwischen den beiden Schnittstellen erforderlich ist.

Diese Aufgabe wird durch eine Chipkarte mit den Merkmalen des Anspruchs 1 gelöst.

Weiterbildungen einer solchen Chipkarte sind Gegenstand der Unteransprüche.

Die grundlegende Idee der Erfindung besteht darin, die Kontaktschnittstelle über einen Serienspannungsregler und die kontaktlose Schnittstelle über einen Gleichrichter und einen Parallelspannungsregler an die logische Schaltung zu deren Spannungsversorgung , wobei die Ausgänge des Serienspannungsreglers und des Parallelspannungsreglers direkt und umschalterfrei an die Versorgungspannungseingänge der logischen Schaltung angeschlossen sind. Der Serienspannungsregler und der Parallelspannungsregler weisen mindestens einen Steuereingang zur Einstellung eines jeweiligen Sollwertes aufweisen.

Die Steuereingänge werden dabei so beaufschlagt, dass jeweils nur ein Regler aktiv ist.

Wenn eine solche Chipkarte mit einer Kontaktschnittstelle und einer kontaktlosen Schnittstelle in ein Schreib-/Lesegerät gesteckt wird, liegt entweder an den Kontakten zur Spannungsversorgung der Kontaktschnittstelle eine Versorgungsspannung an oder es wird in der Antennenspule der kontaktlosen Schnittstelle eine Spannung induziert, aus der die Versorgungsspannung für die kontaktlose Schnittstelle gewonnen wird. Wenn an den Kontakten zur Spannungsversorgung an der Kontaktschnittstelle eine Versorgungsspannung anliegt, zieht der Serienspannungsregler der Kontaktschnittstelle Strom und seine Ausgangsspannung liegt am Parallelspannungsregler an. Es muss vermieden werden, dass der Parallelspannungsregler versucht, die Spannung auf einen niedrigeren Wert zu regeln. Entweder die Sollwerte der beiden Spannungsregler sind präzise aufeinander abgestimmt, oder der Serienspannungsregler gibt über eine Steuerleitung ein Steuersignal an den Parallelspannungsregler der kontaktlosen Schnittstelle ab, welches gemäß einer bevorzugten Ausführungsform der Erfindung den Sollwert des Parallelspannungsreglers nach oben verschiebt, so dass er keinen Strom ableitet. Wenn dagegen im anderen Fall die Chipkarte über die Antennenspule mit Spannung versorgt wird, zieht der Parallelspannungsregler der kontaktlosen Schnittstelle Strom, während der Serienspannungsregler der Kontaktschnittstelle stromlos bleibt. Bei Bestromung gibt der Parallelspannungsregler der kontaktlosen Schnittstelle über eine Steuerleitung ein Steuersignal an den Serienspannungsregler der Kontaktschnittstelle ab, das den Sollwert des Serienspannungsreglers nach unten verschiebt, so dass der Serienspannungsregler ausgeschaltet bleibt.

Durch die erfindungsgemäß bevorzugte Maßnahme, den Sollwert des Serienspannungsreglers der Kontaktschnittstelle bei bestromtem Parallelspannungsregler der kontaktlosen Schnittstelle zu erniedrigen und bei bestromtem Serienspannungsregler der Kontaktschnittstelle den Sollwert des Parallelspannungsreglers der kontaktlosen Schnittstelle anzuheben, ist keine Umschaltung zwischen den beiden Schnittstellen mehr erforderlich. Es sind daher für die Chipkarte keine Schaltungsanordnungen zur Umschaltung von der einen auf die andere Schnittstelle vorzusehen.

Ein erstes Ausführungsbeispiel des erfindungsgemäßen Verfahrens sieht vor, die Referenzspannung für den Serienspannungsregler der Kontaktschnittstelle unmittelbar an den Kontakten für die Versorgungsspannung abzunehmen. Wenn keine externe Spannung an den Kontakten zur Spannungsversorgung anliegt, regelt der Serienspannungsregler auf 0V, so dass das Serienstellglied ausgeschaltet ist und das Fließen eines Rückstromes verhindert wird.

Ein zweites Ausführungsbeispiel des erfindungsgemäßen Verfahrens sieht vor, das von der Kontaktschnittstelle erzeugte Taktsignal mit dem von der kontaktlosen Schnittstelle erzeugten Taktsignal disjunktiv in einem ODER-Gatter zu verknüpfen, um den Takt für die logische Schaltung der Chipkarte zu erzeugen.

Bei einem dritten Ausführungsbeispiel des erfindungsgemäßen Verfahrens wird der von der Kontaktschnittstelle erzeugte Takt dem ersten Eingang eines Filters und der von der kontaktlosen Schnittstelle erzeugte Takt dem zweiten Eingang des Filters zugeführt. Der von der Kontaktschnittstelle erzeugte Takt am ersten Eingang des Filters erniedrigt die Grenzfrequenz für den von der kontaktlosen Schnittstelle erzeugten Takt am zweiten Eingang des Filters. Umgekehrt erniedrigt der von der kontaktlosen Schnittstelle erzeugte Takt am zweiten Eingang des Filters die Grenzfrequenz für den von der Kontaktschnittstelle erzeugten Takt am ersten Eingang des Filters, um den Takt für die logische Schaltung der Chipkarte zu erzeugen. Der für den jeweils anliegenden Takt erforderliche Kanal wird weder gedämpft noch gesperrt, sondern der andere Kanal, so dass bei gleichzeitigem Anliegen eines Taktes von der Kontaktschnittstelle und eines Taktes von der kontaktlosen Schnittstelle die beiden Takte nicht gegenseitig stören, sondern sich nur einer durchsetzt.

Ein viertes Ausführungsbeispiel des erfindungsgemäßen Verfahrens zeigt eine digitale Lösung bei gleichzeitigem Anliegen eines von der Kontaktschnittstelle und eines von der kontaktlosen Schnittstelle erzeugten Taktes.

Ein fünftes Ausführungsbeispiel des erfindungsgemäßen Verfahrens sieht vor, ein Warnsignal an die logische Schaltung der Chipkarte abzugeben, wenn sowohl die Kontaktschnittstelle als auch die kontaktlose Schnittstelle gleichzeitig einen Takt erzeugen. Dieses Warnsignal kann zum Beispiel durch die konjunktive Verknüpfung des Taktes der Kontaktschnittstelle mit dem Takt von der kontaktlosen Schnittstelle mittels eines UND-Gatters erzeugt werden.

Bei einem sechsten Ausführungsbeispiel des erfindungsgemäßen Verfahrens werden in der Kontaktschnittstelle Daten von einem USART- oder einem ersten FIFO-Baustein und in der kontaktlosen Schnittstelle von einem USART- oder einem zweiten FIFO-Baustein gesendet und empfangen. Diese Bausteine sind über einen gemeinsamen Analog-Digital-Datenbus miteinander und mit der logischen Schaltung der Chipkarte verbunden.

Gemäß einem siebten Ausführungsbeispiel des erfindungsgemäßen Verfahrens erzeugen die Kontaktschnittstelle und die kontaktlose Schnittstelle Rücksetzsignale, Taktsignale und Unterbrechungsanforderungssignale. Die Rücksetzsignale, die Taktsignale und die Unterbrechungsanforderungssignale werden jeweils disjunktiv oder antivalent miteinander verknüpft, um ein gemeinsames Rücksetzsignal, ein gemeinsames Taktsignal und ein gemeinsames Unterbrechungsanforderungssignal zu erzeugen. Das gemeinsame Rücksetzsignal, das gemeinsame Taktsignal und das gemeinsame Unterbrechungsanforderungssignal werden an die logische Schaltung der Chipkarte gesendet. Dies hat den Vorteil, dass keine Umschaltvorgänge eingeleitet werden.

Die erfindungsgemäße Chipkarte wird nachfolgend anhand der in den Figuren abgebildeten Ausführungsbeispiele beschrieben und erläutert. In der Zeichnung zeigen:
- Fig. 1: ein Blockschaltbild der erfindungsgemäßen Chipkarte für die Spannungsversorung,
- Fig. 2: ein Blockschaltbild eines ersten Ausführungsbeispieles der erfindungsgemäßen Chipkarte,
- Fig. 3: ein Blockschaltbild eines zweiten Ausführungsbeispieles der erfindungsgemäßen Chipkarte und
- Fig. 4: ein Schaltungsdetail eines dritten Ausführungsbeispieles der erfindungsgemäßen Chipkarte.

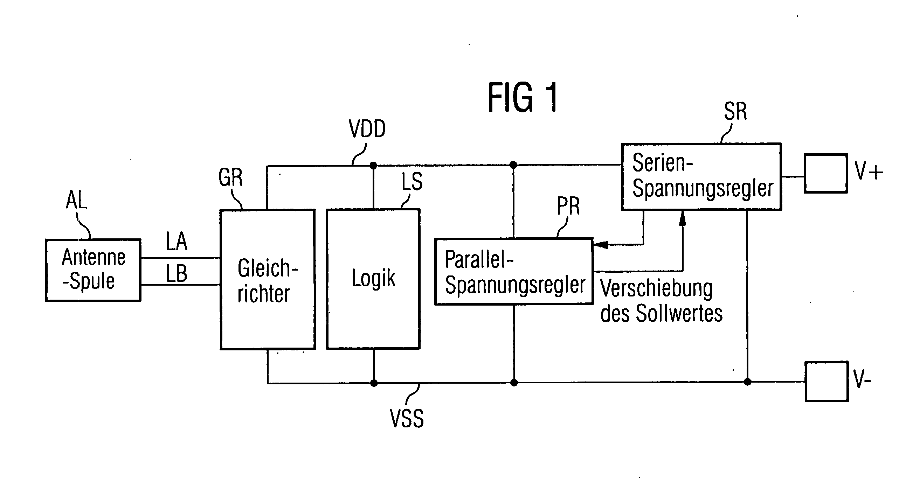

Bei dem Blockschaltbild in der Fig. 1 sind die Anschlüsse LA und LB einer Antennenspule AL mit den Wechselspannungseingängen eines Gleichrichters GR verbunden, an dessen Gleichspannungsausgängen eine logische Schaltung LS, ein Parallelspannungsregler PR und ein Serienspannungsregler SR angeschlossen sind. Am einen Gleichspannungsausgang des Gleichrichters GR ist ein Kontakt V- für den negativen Pol einer externen Versorgungsspanriungsquelle angeschlossen. Ein Kontakt V+ für den positiven Pol der externen Versorgungsspannungsquelle ist an den Serienspannungsregler SR angeschlossen. Der Steuerausgang des Parallelspannungsreglers PR ist mit dem Steuereingang des Serienspannungsreglers SR verbunden, während der Steuerausgang des Serienspannungsreglers SR mit dem Steuereingang des Parallelspannungsreglers PR verbunden ist. Der Serienspannungsregler SR und die beiden Kontakte V+ und V- gehören zur Kontaktschnittstelle, dagegen sind der Parallelspannungsregler PR, der Gleichrichter GR und die Antennenspule AL Bauteile der kontaktlosen Schnittstelle.

Wenn der Serienspannungsregler SR über die Kontakte V+ und V-von einer externen Versorgungsspannungsquelle bestromt wird, gibt er ein Steuersignal an den Parallelspannungsregler PR ab, das den Sollwert des Parallelspannungsreglers PR erhöht, so dass dieser keinen Strom ableitet. Wenn dagegen der Parallelspannungsregler PR der kontaktlosen Schnittstelle von der Antennenspule AL mit einer Versorgungsspannung beaufschlagt wird, und diese regelt, gibt er ein Steuersignal an den Serienspannungsregler SR ab, das den Sollwert des Serienspannungsreglers SR erniedrigt, so dass der Serienspannungsregler SR nicht leitet. Die Kontaktschnittstelle bleibt daher ausgeschaltet, weil sie nicht mit einer Versorgungsspannung beaufschlagt wird. Bei Versorgung der Chipkarte über die Antennenspule AL oder über die Kontakte V+ und V- wird daher automatisch die richtige Schnittstelle - bei Versorgung über die Antennenspule die kontaktlose Schnittstelle, bei Versorgung über die Kontakte die Kontaktschnittstelle - den Strom liefern, ohne dass hierzu Schaltvorrichtungen vorgesehen sind.

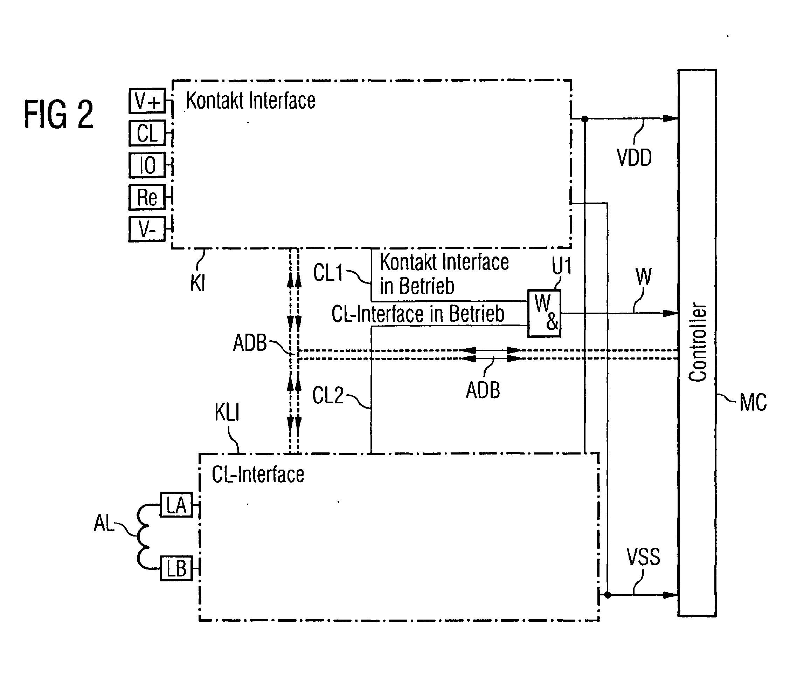

Es wird nun das in der Figur 2 gezeigte Ausführungsbeispiel der erfindungsgemäßen Chipkarte beschrieben und erläutert.

Die Kontaktschnittstelle KI weist einen Kontakt V+ für den positiven Pol und einen Kontakt V- für den negativen Pol einer externen Versorgungsspannungsquelle, einen Kontakt CL für einen externen Takt, einen Kontakt IO für die Datenübertragung in beide Richtungen und einen Kontakt RE für ein externes Rücksetzsignal auf.

In der kontaktlosen Schnittstelle KLI ist eine Antennenspule AL mit zwei Anschlüssen LA und LB vorgesehen. Die Dateneingänge und die Datenausgänge der beiden Schnittstellen KI und KLI sowie einer logischen Schaltung MC sind über einen gemeinsamen Analog-Digital-Datenbus ADB miteinander verbunden. Der Taktausgang CL1 der Kontaktschnittstelle KI ist mit dem ersten Eingang eines UND-Gatters U1 und der Taktausgang CL2 der kontaktlosen Schnittstelle KLI mit dem zweiten Eingang des UND-Gatters U1 verbunden, dessen Ausgang mit der logischen Schaltung MC verbunden ist. Die Versorgungsspannungen VDD und VSS der beiden Schnittstellen KI und KLI sind parallel geschaltet und an die logische Schaltung MC angeschlossen. Wenn beide Schnittstellen - die Kontaktschnittstelle KI und die kontaktlose Schnittstelle KLI - gleichzeitig einen Takt CL1 und CL2 erzeugen, sendet das UND-Gatter U1 wegen der konjunktiven Verknüpfung der beiden Takte CL1 und CL2 ein Warnsignal W an die logische Schaltung MC.

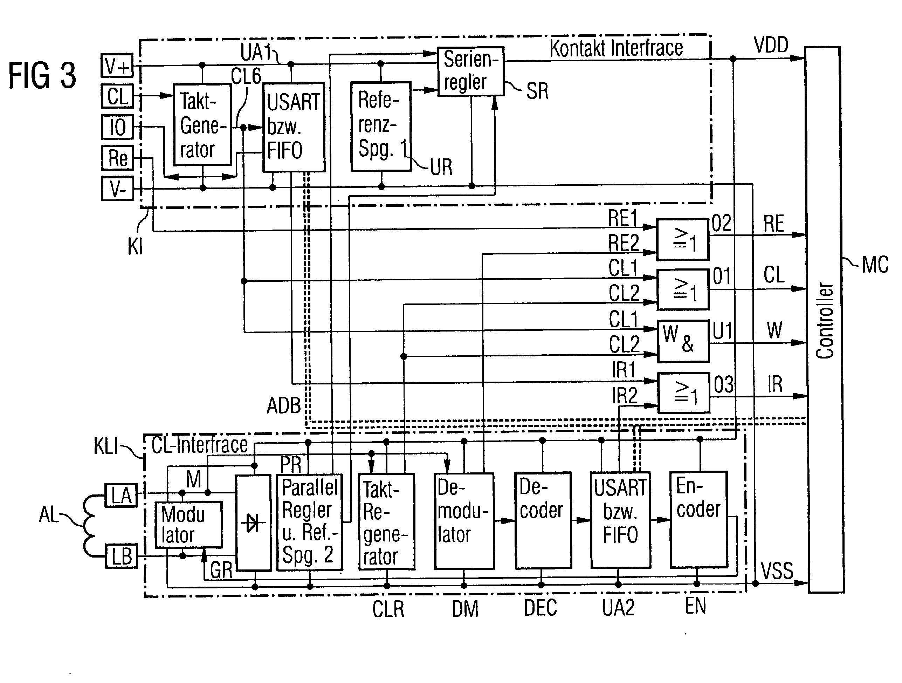

Es wird nun das zweite in der Figur 3 abgebildete Ausführungsbeispiel einer erfindungsgemäßen Chipkarte beschrieben und erläutert.

In der Kontaktschnittstelle KI sind der Kontakt V+ für den positiven Pol der externen Versorgungsspannungsquelle und der Kontakt V- für den negativen Pol der externen Versorgungsspannungsquelle mit den Versorgungsspannungseingängen eines Taktgenerators CLG, eines UART- oder eines FIFO-Bausteins UA1, einer Referenzspannungsquelle UR und des Serienspannungsreglers SR verbunden. Der Referenzspannungsausgang der Referenzspannungsquelle UR ist mit dem Referenzspannungseingang des Serienspannungsreglers SR verbunden. Der Kontakt IO für die Datenübertragung in beide Richtungen ist mit dem Dateneingang und dem Datenausgang des UART- oder FIFO-Bausteins UA1 verbunden. Der Taktausgang CL1 des Taktgenerators CLG ist mit dem Takteingang des UART- oder des FIFO-Bausteins UA1 verbunden.

In der kontaktlosen Schnittstelle KLI ist der eine Anschluss LA der Antennenspule AL mit dem einen Dateneingang eines Modulators M, eines Taktregenerators CLR und eines Demodulators DM sowie mit dem einen Wechselspannungseingang des Gleichrichters GR verbunden, dessen anderer Wechselspannungseingang mit dem anderen Anschluss LB der Antennenspule AL verbunden ist. Die Gleichspannungsausgänge des Gleichrichters GR sind mit den Versorgungsspannungseingängen des Parallelspannungsreglers PR, des Modulators M, des Taktregenerators CLR, des Demodulators DM, eines Decoders DEC, eines U(S)ART- oder eines FIFO-Bausteins UA2 und eines Encoders EN verbunden. Der Demodulator DM ist mit dem Decoder DEC verbunden, der mit dem U(S)ART- oder dem FIFO-Baustein UA2 verbunden ist. Der U(S)ART- oder der FIFO-Baustein UA2 ist mit dem Encoder EN verbunden, dessen Datenausgang mit dem Dateneingang des Modulators M verbunden ist.

Der UART- oder der FIFO-Baustein UA1 der Kontaktschnittstelle KI und der U(S)ART- oder der FIFO-Baustein UA2 der kontaktlosen Schnittstelle KLI sind über den gemeinsamen Analog-Digital-Datenbus ADB miteinander und mit dem Dateneingang der logischen Schaltung MC verbunden. Die Versorgungsspannungsausgänge VDD und VSS des Serienspannungsreglers SR der Kontaktschnittstelle KI sind parallel zu den Versorgungsspannungsausgängen des Parallelspannungsreglers PR der kontaktlosen Schnittstelle KLI geschaltet und mit den Versorgungsspannungseingängen der logischen Schaltung MC verbunden. Der Versorgungsspannungsausgang VSS bildet das Bezugspotential. Der Taktausgang CL1 des Taktgenerators CLG der Kontaktschnittstelle KI ist mit dem ersten Eingang eines UND-Gatters U1 und eines ODER-Gatters O1 verbunden. Der Taktausgang CL2 des Taktregenerators CLR der kontaktlosen Schnittstelle KLI ist mit dem zweiten Eingang des UND-Gatters U1 und mit dem zweiten Eingang des ODER-Gatters O1 verbunden. Der Kontakt RE für das externe Rücksetzsignal RE1 der Kontaktschnittstelle KI ist mit dem ersten Eingang eines ODER-Gatters O2 verbunden, während der Rücksetzausgang RE2 des Demodulators DM der kontaktlosen Schnittstelle KLI mit dem zweiten Eingang des ODER-Gatters O2 verbunden ist. Der Unterbrechungsausgang IR1 des UART- oder des FIFO-Bausteins UA1 der Kontaktschnittstelle KI ist mit dem ersten Eingang eines ODER-Gatters 03 verbunden, während der Unterbrechungsausgang IR2 des U(S)ART- oder des FIFO-Bausteins UA2 der kontaktlosen Schnittstelle KLI mit dem zweiten Eingang des ODER-Gatters O3 verbunden ist. Der Ausgang des UND-Gatters U1 ist mit einem Steuereingang W, der Ausgang des ODER-Gatters O1 mit dem Takteingang CL, der Ausgang des ODER-Gatters O2 mit dem Rücksetzeingang RE und der Ausgang des ODER-Gatters O3 mit dem Unterbrechungseingang IR der logischen Schaltung MC verbunden. Der Steuerausgang des Parallelspannungsreglers PR der kontaktlosen Schnittstelle KLI ist mit dem Steuereingang des Serienspannungsreglers SR verbunden und/oder der Steuerausgang des Serienspannungsreglers SR ist mit dem Steuereingang des Parallelspannungsreglers PR verbunden. Alternativ dazu kann der Steuerausgang des Serienspannungsreglers SR mit dem Steuereingang des Parallelspannungsreglers PR verbunden sein. Es können aber auch beide Steuerverbindungen vorgesehen sein.

Wenn der Serienspannungsregler SR der Kontaktschnittstelle KI über die Kontakte V+ und V-, an denen die externe Versorgungsspannungsquelle anliegt, Strom zieht, steuert er den Sollwert des Parallelspannungsreglers PR der kontaktlosen Schnittstelle KLI nach oben, wodurch dieser stromlos bleibt, auch wenn sein Sollwert ursprünglich nicht präzise eingestellt war. Zieht dagegen der Parallelspannungsregler PR der kontaktlosen Schnittstelle KLI Strom von der Antennenspule AL, so verschiebt er den Sollwert des Serienspannungsreglers SR der Kontaktschnittstelle KI nach unten, wodurch der Serienspannungsregler inaktiviert bleibt. Es wird daher sichergestellt, ohne dass Schaltmittel irgendwelche Umschaltvorgänge vornehmen, dass sich die Spannungsregler der beiden Schnittstellen nicht stören.

Der Datenaustausch zwischen dem UART- oder dem FIFO-Baustein UA1 der Kontaktschnittstelle KI, dem U(S)ART- oder FIFO-Baustein UA2 der kontaktlosen Schnittstelle KLI und der logischen Schaltung MC erfolgt über den gemeinsamen Analog-Digital-Datenbus ADB. Ein UART- und ein U(S)ART- Baustein arbeitet als Sender und Empfänger für serielle Daten (Universal Synchronous/Asynchronous/Receiver/Transmitter). Ein FIFO-Baustein ist ein Zwischenspeicher für Daten. FIFO steht für FIRST IN, FIRST OUT. Hier wird ein FIFO-Register optional in Verbindung mit einem U(S)ART verwendet.

Die vom Taktgenerator CLG der Kontaktschnittstelle KI gelieferten Taktsignale CL1 werden im ODER-Gatter 01 mit den vom Taktregenerator CLR der kontaktlosen Schnittstelle KLI erzeugten Taktsignalen CL2 disjunktiv zu einem Taktsignal CL verknüpft, das die logische Schaltung MC taktet. Analog dazu wird das am Kontakt RE der Kontaktschnittstelle KI abgenommene Rücksetzsignal RE1 im ODER-Gatter 02 mit dem Rücksetzsignal RE2 des Demodulators DM disjunktiv zu einem gemeinsamen Rücksetzsignal RE verknüpft, das am Rücksetzeingang der logischen Schaltung MC anliegt. Das Unterbrechungsaufforderungssignal IR1 des UART- oder des FIFO-Bausteins UA1 der Kontaktschnittstelle KI wird mit dem Unterbrechungsanforderungssignal IR2 des U(S)ART- oder des FIFO-Bausteins UA2 der kontaktlosen Schnittstelle KLI im ODER-Gatter 03 disjunktiv zu einem gemeinsamen Unterbrechungsanforderungssignal IR für die logische Schaltung MC verknüpft.

Der Takt CL1 des Taktgenerators CLG der Kontaktschnittstelle KL wird mit dem Takt CL2 des Taktregenerators CLR der kontaktlosen Schnittstelle KLI im UND-Gatter U1 konjunktiv verknüpft, um ein Warnsignal W zu erzeugen, das der logischen Schaltung MC zugeführt wird. Liefert sowohl der Taktgenerator CLG als auch der Taktregenerator CLR jeweils einen Takt CL1 bzw. CL2, so gibt das UND-Gatter U1 an seinem Ausgang eine logische 1 an die logische Schaltung MC ab, welche diese logische 1 als Warnsignal W interpretiert und gegebenenfalls geeignete Schutzmaßnahmen einleitet.

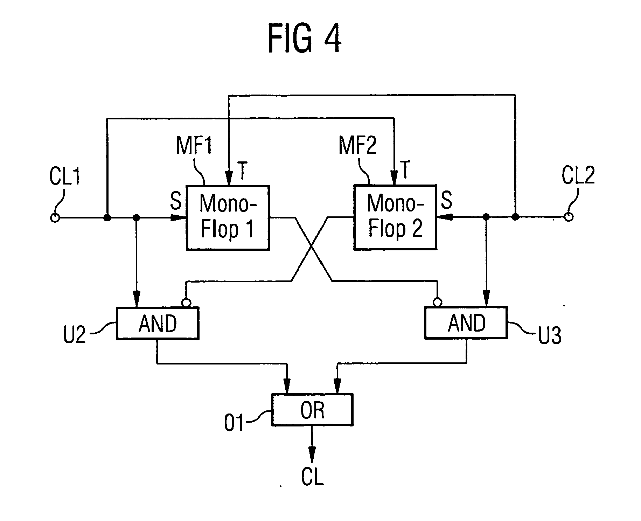

Bei einem dritten Ausführungsbeispiel einer erfindungsgemäßen Chipkarte ist dem ODER-Gatter 01 in der Fig. 3 ein Verzögerungsglied vorgeschaltet, das in Fig. 4 abgebildet ist.

Der vom Taktgenerator CLG erzeugte Takt CL1 wird dem Setzeingang S einer ersten Kippstufe MF1 und dem Takteingang T einer zweiten monostabilen Kippstufe MF2 und dem ersten Eingang eines UND-Gatters U2 zugeführt, während der vom Taktregenerator CLR der kontaktlosen Schnittstelle KLI generierte Takt CL2 dem Setzeingang S der monostabilen Kippstufe MF2 und dem Takteingang T der monostabilen Kippstufe MF1 und dem ersten Eingang eines UND-Gatters U3 zugeführt wird. Das Ausgangssignal der monostabilen Kippstufe MF1 wird invertiert dem zweiten Eingang des UND-Gatters U3 zugeführt, dessen Ausgang mit dem ersten Eingang des ODER-Gatters 01 verbunden ist, während analog dazu das Ausgangssignal der monostabilen Kippstufe MF2 invertiert dem zweiten Eingang des UND-Gatters U2 zugeführt wird, dessen Ausgang mit dem zweiten Eingang des ODER-Gatters 01 verbunden ist. Der Ausgang des ODER-Gatters O1, an dem der Takt CL für die logische Schaltung MC abnehmbar ist, ist mit dem Takteingang der logischen Schaltung MC verbunden.

Ein an der monostabilen Kippstufe MF1 liegendes Taktsignal CL1 sperrt das UND-Gatter U3, wird aber über das UND-Gatter U2 und das ODER-Gatter 01 an den Takteingang CL der logischen Schaltung MC weitergeleitet. Sinngemäß sperrt ein Taktsignal CL2 vom Taktregenerator CLR der kontaktlosen Schnittstelle KLI das UND-Gatter U2, während es gleichzeitig über das UND-Gatter U3 und das ODER-Gatter O1 zum Takteingang CL der logischen Schaltung MC geleitet wird. Liefert sowohl der Taktgenerator CLG der Kontaktschnittstelle KI als auch der Taktregenerator CLR der kontaktlosen Schnittstelle KLI gleichzeitig ein Taktsignal, so werden beiden UND-Gatter U2 und U3 gesperrt. Am Takteingang CL der logischen Schaltung MC liegt in diesem Fall daher kein Taktsignal an.

Im Stromversorgungspfad der Kontaktschnittstelle KI kann zum Beispiel eine Diode vorgesehen sein, um einen Rückstrom zu vermeiden, falls der Serienspannungsregler SR einen Rückstrom nicht unterbindet.

Die erfindungsgemäße Chipkarte kann sowohl mit einem Schreib-/Lesegerät kommunizieren, das elektrische Kontakte aufweist oder mit einem Schreib-/Lesegerät, das zur Energie- und Datenübertragung eine Antennenspule vorsieht. Ohne dass auf der Chipkarte Schaltmittel zum Umschalten vorgesehen sind, wird bei einer in ein Schreib-/Lesegerät gesteckten erfindungsgemäßen Chipkarte stets die angesprochene Schnittstelle - die Kontaktschnittstelle oder die kontaktlose Schnittstelle - aktiviert, während die andere im inaktivierten oder ausgeschalteten Zustand bleibt. Für den Fall, dass beide Schnittstellen ein Taktsignal liefern, wird ein Warnsignal erzeugt, das geeignete Schutzmaßnahmen einleitet.

Für die logische Schaltung MC ist vorzugsweise zum Beispiel ein Microcontroller oder ein Microprozessor besonders gut geeignet.

Weil auf der erfindungsgemäßen Chipkarte keinerlei Schaltmittel zum Umschalten von der Kontaktschnittstelle auf die kontaktlose Schnittstelle und umgekehrt angeordnet sind, die angesprochene Schnittstelle aber trotzdem aktiviert wird, ist der auf der erfindungsgemäßen Chipkarte angeordnete Chip ohne großen Aufwand leicht integrierbar.

## Patentansprüche

1. Chipkarte mit einer Kontaktschnittstelle (KI) und einer kontaktlosen Schnittstelle (KLI) sowie mit einer integrierten logischen Schaltung (LS), welche von einer der beiden Schnittstellen (KL, KLI) mit Spannung zur Spannungsversorgung beaufschlagbar ist,
**dadurch gekennzeichnet, dass**
- die Kontaktschnittstelle (KI) über einen Serienspannungsregler (SR) und die kontaktlose Schnittstelle (KLI) über einen Gleichrichter (GR) und einen Parallelspannungsregler (PR) an die logische Schaltung (LS) gekoppelt ist, wobei die Ausgänge des Serienspannungsreglers (SR) und des Parallelspannungsreglers (PR) direkt und damit umschalterfrei an die Versorgungspannungseingänge (VDD, VSS) der logischen Schaltung (LS) angeschlossen sind,
- der Serienspannungsregler (SR) und der Parallelspannungsregler (PR) mindestens einen Steuereingang zur Einstellung eines jeweiligen Sollwertes aufweisen, und
- die Steuereingänge der Regler so beaufschlagt werden, dass jeweils nur ein Regler aktiv ist.

2. Chipkarte nach Anspruch 1,
**dadurch gekennzeichnet, dass** die Spannungsausgänge des Parallelspannungsreglers (PR) und des Serienspannungsreglers (SR) unmittelbar miteinander verbunden sind.

3. Chipkarte nach Anspruch 1 oder 2,
**dadurch gekennzeichnet, dass** der Serienspannungsregler (SR) und/oder der Parallelspannungsregler (PR) mindestens einen Steuereingang aufweisen zur Einstellung eines jeweiligen Sollwertes, und dass dieser Steuereingang vom jeweils anderen Spannungsregler (PR, SR) beaufschlagbar ist.

4. Chipkarte nach Anspruch 3,
**dadurch gekennzeichnet, dass** der Sollwert des Serienspannungsreglers (SR) zu kleineren Spannungen hin nach unten verschoben wird, wenn der Parallelspannungsregler (PR) Strom zieht und/oder dass der Sollwert des Parallelspannungsreglers (PR) zu höheren Spannungen hin nach oben verschoben wird, wenn der Serienspannungsregler (SR) Strom liefert.

5. Chipkarte nach einem der Ansprüche 1 bis 4,
**dadurch gekennzeichnet, dass** der Serienspannungsregler (SR) rückstromfrei ausgebildet ist.

6. Chipkarte nach einem der Ansprüche 1 bis 5,
**dadurch gekennzeichnet, dass** eine Referenzspannung für den Serienspannungsregler (SR) aus einer Versorgungspannung an Eingangskontakten (V+, V-) des Serienspannungsreglers (SR) abgenommen wird.

7. Chipkarte nach Anspruch 6,
**dadurch gekennzeichnet, dass** der Serienspannungsregler (SR) nicht leitet, wenn an den Eingangskontakten (V+, V-) keine Spannung anliegt.

8. Chipkarte nach einem der Ansprüche 1 bis 7,
**dadurch gekennzeichnet, dass** die Kontaktschnittstelle (KI) und die kontaktlose Schnittstelle (KLI) jeweils Taktausgänge (CL1, CL2) aufweisen, wobei diese Taktausgänge (CL1, CL2) so verknüpft sind, dass nur eine einzige Taktleitung (CL1 oder CL2) Taktsignale an die logische Schaltung (LS) weiterleitet.

9. Chipkarte nach Anspruch 8,
**dadurch gekennzeichnet, dass** zur Verknüpfung ein oder mehrere Logikgatter (U1) eingesetzt sind.

10. Chipkarte nach Anspruch 8 oder 9
**dadurch gekennzeichnet, dass** die Verknüpfung über eine digitale und/oder analoge Filtereinrichtung derart erfogt, dass beim Auftreten eines ersten Taktsignales auf einer Taktleitung (CL1;CL2) die Grenzfrequenz für ein zweites Taktsignal (CL1;CL2) soweit abgesenkt wird, dass die Übertragung dieses zweiten Taktsignales für die Dauer des Vorhandenseins des ersten Taktsignales verhindert ist.

11. Chipkarte nach einem der Ansprüche 8 bis 10,
**dadurch gekennzeichnet, dass** ein Warneinrichtung vorgesehen ist zur Erzeugung eines Warnsignales, wenn an beiden Taktleitungen (CL1, CL2) ein Taktsignal detektiert wird.

12. Chipkarte nach einem der Ansprüche 1 bis 11,
**dadurch gekennzeichnet, dass** die Kontaktschnittstelle (KI) und die kontaktlose Schnittstelle (KLI) jeweils mindestens einen Interrupt-Request-Ausgang aufweisen und die logische Schaltung (LS) hierfür getrennte Eingänge besitzt, denen Interrupt-Request-Signale (IR1, IR2) dieser Interrupt-Request-Ausgänge zugeführt werden.

13. Chipkarte nach einem der Ansprüche 1 bis 11,
**dadurch gekennzeichnet, dass** die Kontaktschnittstelle (KI) und die kontaktlose Schnittstelle (KLI) jeweils mindestens einen Interrupt-Request-Ausgang aufweisen und die logische Schaltung (LS) hierfür einen gemeinsamen Eingang besitzt, dem die Interrupt-Request-Signale (IR1, IR2) dieser Interrupt-Request-Ausgänge über ein Oder-Gatter logisch verknüpft zugeführt wird.

14. Chipkarte nach einem der Ansprüche 1 bis 13,
**dadurch gekennzeichnet, dass** die Kontaktschnittstelle (KI) und kontaktlose Schnittstelle (KLI) und die logischen Schaltung (LS) über eine Adress-Daten-Bus miteinander verbunden sind.

15. Chipkarte nach Anspruch 14,
**dadurch gekennzeichnet, dass** in der Kontaktschnittstelle (KI) Daten von einem UART- oder einem ersten FIFO-Baustein (UA1) und in der kontaktlosen Schnittstelle (KLI) von einem USART- oder einem zweiten FIFO-Baustein (UA2) gesendet und empfangen werden und dass der UART-, der USART-Baustein oder die FIFO-Bausteine (UA1, UA2) über einen gemeinsamen Analog-Digital-Datenbus (ADB) mit der logischen Schaltung (LS) verbunden sind.

16. Chipkarte nach Anspruch 14 oder 15,
**dadurch gekennzeichnet, dass** die Dateneingänge und die Datenausgänge der Kontaktschnittstelle (KI) und der kontaktlosen Schnittstelle (KLI) sowie der logischen Schaltung (MC) über einen gemeinsamen Analog-Digital-Datenbus (ADB) miteinander verbunden sind, dass der Taktausgang (CL1) der Kontaktschnittstelle (KI) mit dem ersten Eingang eines ersten UND-Gatters (U1) und der Taktausgang (CL2) der kontaktlosen Schnittstelle (KLI) mit dem zweiten Eingang des ersten UND-Gatters (U1) verbunden ist, dessen Ausgang mit dem Takteingang (CL) der logischen Schaltung (MC) verbunden ist, dass die Versorgungsspannungsausgänge (VDD, VSS) der Kontaktschnittstelle (KI) und der kontaktlosen Schnittstelle (KLI) parallelgeschaltet und an die logische Schaltung (MC) angeschlossen sind.

## Claims

1. Smartcard having a contact interface (KI) and a contactless interface (KLI) and having an integrated logic circuit (LS), to which it is possible to apply voltage for supplying power from one of the two interfaces (KL, KLI),
**characterized in that**
- the contact interface (KI) is coupled to the logic circuit (LS) via a series voltage regulator (SR), and the contactless interface (KLI) is coupled to the logic circuit (LS) via a rectifier (GR) and a parallel voltage regulator (PR), with the outputs of the series voltage regulator (SR) and of the parallel voltage regulator (PR) being connected directly, and hence without a changeover switch, to the supply voltage inputs (VDD, VSS) of the logic circuit (LS),
- the series voltage regulator (SR) and the parallel voltage regulator (PR) have at least one control input for setting a respective setpoint value, and
- an input is applied to the control inputs of the regulators such that only one regulator at a time is enabled.

2. Smartcard according to Claim 1,
**characterized in that** the voltage outputs of the parallel voltage regulator (PR) and of the series voltage regulator (SR) are connected together directly.

3. Smartcard according to Claim 1 or 2,
**characterized in that** the series voltage regulator (SR) and/or the parallel voltage regulator (PR) has at least one control input for setting a respective setpoint value, and that the other respective voltage regulator (PR, SR) can apply an input to this control input.

4. Smartcard according to Claim 3,
**characterized in that** the setpoint value of the series voltage regulator (SR) is adjusted downwards to lower voltages when the parallel voltage regulator (PR) is drawing current and/or that the setpoint value of the parallel voltage regulator (PR) is adjusted upwards to higher voltages when the series voltage regulator (SR) is supplying current.

5. Smartcard according to any of Claims 1 to 4,
**characterized in that** the series voltage regulator (SR) is designed to have no reverse current.

6. Smartcard according to any of Claims 1 to 5,
**characterised in that** a reference voltage for the series voltage regulator (SR) is taken from a supply voltage across input contacts (V+, V-) of the series voltage regulator (SR).

7. Smartcard according to Claim 6,
**characterised in that** the series voltage regulator (SR) does not conduct when there is no voltage across the input contacts (V+, V-).

8. Smartcard according to any of Claims 1 to 7,
**characterized in that** the contact interface (KI) and the contactless interface (KLI) each have clock outputs (CL1, CL2), these clock outputs (CL1, CL2) being combined in such a way that only one single clock line (CL1 or CL2) transfers clock signals to the logic circuit (LS).

9. Smartcard according to Claim 8,
**characterized in that** one or more logic gates (U1) are used for combining the clocks.

10. Smartcard according to Claim 8 or 9,
**characterized in that** the clocks are combined via a digital and/or analogue filter device in such a way that when a first clock signal appears on a clock line (CL1; CL2), the cutoff frequency for a second clock signal (CL2; CL1) is reduced so far that the transmission of this second clock signal is prevented for the period of existence of the first clock signal (CL1; CL2).

11. Smartcard according to any of Claims 8 to 10,
**characterized in that** a warning device is provided to generate a warning signal when a clock signal is detected on both clock lines (CL1, CL2).

12. Smartcard according to any of Claims 1 to 11,
**characterized in that** the contact interface (KI) and the contactless interface (KLI) each have at least one interrupt request output, and the logic circuit (LS) has separate inputs for this, to which are input interrupt request signals (IR1, IR2) from these interrupt request outputs.

13. Smartcard according to any of Claims 1 to 11,
**characterized in that** the contact interface (KI) and the contactless interface (KLI) each have at least one interrupt request output, and the logic circuit (LS) has a common input for this, to which is input a logical-OR combination of the interrupt request signals (IR1, IR2) from these interrupt request outputs.

14. Smartcard according to any of Claims 1 to 13,
**characterized in that** the contact interface (KI) and contactless interface (KLI) and the logic circuit (LS) are connected together via an address-data bus.

15. Smartcard according to Claim 14,
**characterized in that** data from a UART chip or a first FIFO chip (UA1) is sent and received in the contact interface (KI), and data from a USART or a second FIFO chip (UA2) is sent and received in the contactless interface (KLI), and that the UART chip, the USART chip or the FIFO chips (UA1, UA2) are connected to the logic circuit (LS) via a common analogue-digital data bus (ADB).

16. Smartcard according to Claim 14 or 15,
**characterized in that** the data inputs and the data outputs of the contact interface (KI) and of the contactless interface (KLI), and of the logic circuit (MC) are connected together via a common analogue-digital data bus (ADB), that the clock output (CL1) of the contact interface (KI) is connected to the first input of a first AND gate (U1), and the clock output (CL2) of the contactless interface (KLI) is connected to the second input of the first AND gate (U1), whose output is connected to the clock input (CL) of the logic circuit (MC), and that the supply voltage outputs (VDD, VSS) of the contact interface (KI) and of the contactless interface (KLI) are connected in parallel and connected to the logic circuit (MC).

## Revendications

1. Carte à puce ayant une interface (KI) à contact et une interface (KLI) sans contact ainsi qu'un circuit (LS) logique intégré qui, pour l'alimentation en tension, peut être alimenté en tension par l'une des deux interfaces (KL, KLI),
**caractérisée en ce que**
- l'interface (KI) à contact est couplée au circuit (LS) logique par un régulateur (SR) de tension série et l'interface (KLI) sans contact par un redresseur (GR) et un régulateur (PR) de tension parallèle, les sorties du régulateur (SR) de tension série et du régulateur (PR) de tension parallèle étant reliées directement et ainsi sans commutateur aux entrées (VDD, VSS) d'alimentation en tension du circuit (LS) logique,
- le régulateur (SR) de tension série et le régulateur (PR) de tension parallèle ont au moins une entrée de commande pour le réglage d'une valeur de consigne respective, et
- les entrées de commande des régulateurs sont alimentées de manière à ce que, respectivement, seulement un régulateur soit actif.

2. Carte à puce suivant la revendication 1,
**caractérisée en ce que** les sorties de tension du régulateur (PR) de tension parallèle et du régulateur (SR) de tension série sont reliées directement entre elles.

3. Carte à puce suivant la revendication 1 ou 2,
**caractérisée en ce que** le régulateur (SR) de tension série et/ou le régulateur (PR) de tension parallèle ont au moins une entrée de commande pour le réglage d'une tension de consigne respective et **en ce que** cette entrée de commande peut être alimentée par, respectivement, l'autre régulateur (PR, SR) de tension.

4. Carte à puce suivant la revendication 3,
**caractérisée en ce que** la valeur de consigne du régulateur (SR) de tension série est décalée vers le bas vers les tensions plus basses lorsque le régulateur (PR) de tension parallèle soutire du courant et/ou **en ce que** la valeur de consigne du régulateur (PR) de tension parallèle est décalée vers le haut vers les tensions plus hautes lorsque le régulateur (SR) de tension série fournit du courant.

5. Carte à puce suivant l'une des revendications 1 à 4,
**caractérisée en ce que** le régulateur (SR) de tension série est constitué sans courant de retour.

6. Carte à puce suivant l'une des revendications 1 à 5,
**caractérisée en ce qu'**une tension de référence pour le régulateur (SR) de tension série est prélevée d'une tension d'alimentation aux contacts (V+, V-) d'entrée du régulateur (SR) de tension série.

7. Carte à puce suivant la revendication 6,
**caractérisée en ce que** le régulateur (SR) de tension série ne conduit pas lorsqu'il ne s'applique pas de tension aux contacts (V+, V-) d'entrée.

8. Carte à puce suivant l'une des revendications 1 à 7,
**caractérisée en ce que** l'interface (KI) à contact et l'interface (KLI) sans contact ont, respectivement, des sorties (CL1, CL2) d'horloge, ces sorties (CL1, CL2) d'horloge étant combinées de façon que seulement une ligne (CL1 ou CL2) d'horloge unique achemine des signaux d'horloge au circuit (LS) logique.

9. Carte à puce suivant la revendication 8,
**caractérisée en ce que**, pour la combinaison, il est utilisé une ou plusieurs portes (U1) logiques.

10. Carte à puce suivant la revendication 8 ou 9,
**caractérisée en ce que** la combinaison s'effectue par un dispositif de filtrage numérique et/ou analogique, de façon qu'à l'apparition d'un premier signal d'horloge sur une ligne (CL1, CL2) d'horloge la fréquence limite pour un deuxième signal (CL2, CL1) d'horloge soit abaissée au point que la transmission de ce deuxième signal d'horloge est empêchée pendant la durée de la présence du premier signal (CL1, CL2) d'horloge.

11. Carte à puce suivant l'une des revendications 8 à 10,
**caractérisée en ce qu'**il est prévu un dispositif d'alerte pour la production d'un signal d'alerte lorsqu'un signal d'horloge est détecté sur les deux lignes (CL1, CL2) d'horloge.

12. Carte à puce suivant l'une des revendications 1 à 11,
**caractérisée en ce que** l'interface (KI) à contact et l'interface (KLI) sans contact ont, respectivement, au moins une sortie de demande d'interruption et le circuit (LS) logique a, à cet effet, des entrées séparées auxquelles des signaux (IT1, IR2) de demande d'interruption sont envoyés à ces sorties de demande d'interruption.

13. Carte à puce suivant l'une des revendications 1 à 11,
**caractérisée en ce que** l'interface (LI) à contact et l'interface (KLI) sans contact ont, respectivement, au moins une sortie de demande d'interruption et le circuit (LS) logique a, à cet effet, une entrée commune à laquelle les signaux (IR1, IR2) de demande d'interruption sont envoyés en étant combinés logiquement par une porte OU à ces sorties de demande d'interruption.

14. Carte à puce suivant l'une des revendications 1 à 13,
**caractérisée en ce que** l'interface (KI) à contact et l'interface (KLI) sans contact et le circuit (LS) logique sont reliés entre eux par un bus d'adresse-données.

15. Carte à puce suivant la revendication 14,
**caractérisée en ce que**, dans l'interface (KI) à contact, sont émises et reçues des données d'un module UART ou d'un premier module (UA1) FIFO et dans l'interface (KLI) sans contact, d'un module USART ou d'un deuxième module FIFO et **en ce que** le module UART, le module USART ou les modules (UA1, UA2) FIFO sont reliés au circuit (LS) logique par un bus (ADB) de données analogiques-numériques commun.

16. Carte à puce suivant la revendication 14 ou 15,
**caractérisée en ce que** les entrées de données et les sorties de données de l'interface (KI) à contact et de l'interface (KLI) sans contact ainsi que du circuit (MC) logique sont reliées entre elles par un bus (ADB) de données analogiques-numériques commun, **en ce que** la sortie (CL1) d'horloge de l'interface (KI) à contact est reliée à la première entrée d'une première porte (U1) ET et la sortie (CL2) d'horloge de l'interface (KLI) sans contact, à la deuxième entrée de la première porte (U1) ET, dont la sortie est reliée à l'entrée (CL) d'horloge du circuit (MC) logique, **en ce que** les sorties (VDD, VSS) de tension d'alimentation de l'interface (KI) à contact et de l'interface (KLI) sans contact sont montées en parallèle et sont raccordées au circuit (MC) logique.
